# EUROPEAN PATENT APPLICATION

(11) **EP 3 364 216 A1**
(43) Date of publication of application: **22.08.2018**
(21) Application number: 17157163.1
(22) Date of filing: 21.02.2017
(51) Int. Cl.: G01V 3/165, B64D 3/02, G05D 1/08

(54) **AIRBORNE TOWED DEVICE WITH A VERTICAL ATTITUDE-CORRECTING POLE**

(71) Applicant: Action Communication, 83390 Cuers (FR)
(72) Inventor: GIORDANA, Alexis, 83390 PIERREFEU (FR)
(74) Representative: de Jong, Jean Jacques

(57) **Abstract**

The invention relates to an aircraft-towed device, comprising a support structure (10) that is substantially flat when deployed; a transmission antenna (14) mounted on the support structure, having a conductor wound in a loop near the edges of the support structure; an attachment element (30) configured for mechanically and electrically coupling the towed device to a towing cable (20); and an attitude-correcting pole (24) arranged between the attachment element and the support structure, and configured to assume a vertical position when the device is towed. The towed device comprises power conversion circuitry (52, 54) coupled between the attachment element and the transmission antenna, configured to power the transmission antenna (14) at a high current and a low voltage from a higher voltage and lower current conveyed through the towing cable; and the power conversion circuitry is mounted (60) at the bottom of the attitude-correcting pole.

## Description

### Field

The present disclosure relates to airborne structures designed to achieve measurements, in particular geophysical, and more specifically to structures designed to be towed by an aircraft.

### Background

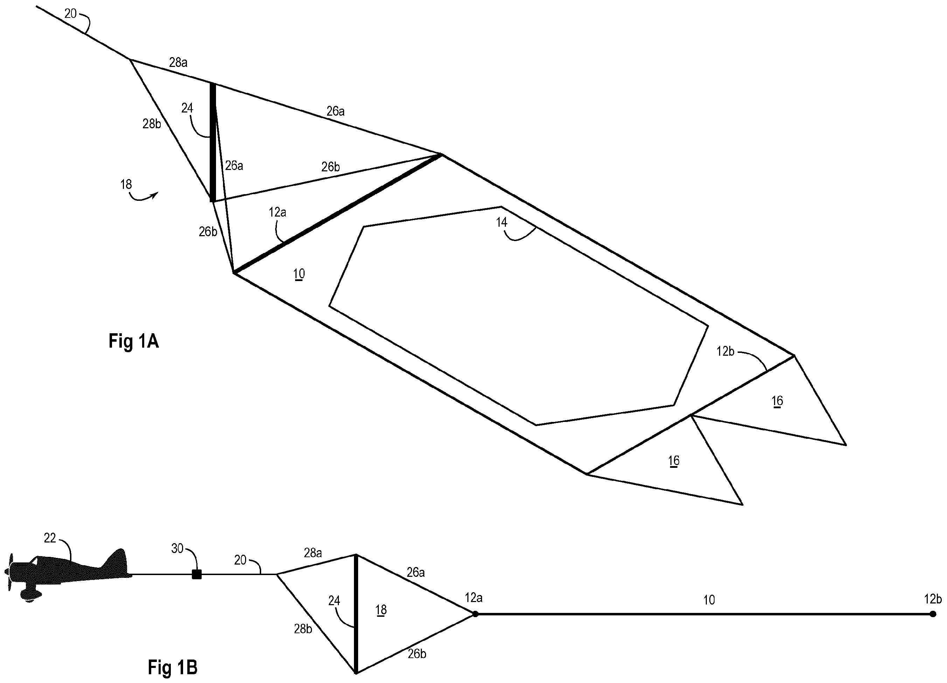

Figures 1A and 1B, which will be described together, are a schematic perspective view and a side view of a towed airborne device for geophysical measurement purposes, such as disclosed in international patent application WO2015/189483. A main support platform 10 includes a rectangular piece of fabric held between a leading pole 12a and a trailing pole 12b. The platform 10 may have considerable proportions, such as 15 meters wide by 50 meters long. The size of the platform is mainly determined by the desired characteristics of a transmission antenna 14 carried by the platform. The transmission antenna includes one or more turns of a conductor that runs near the edges of the platform. A reception antenna is usually also provided, that may occupy a significantly smaller surface area than the transmission antenna.

It is usually desired to keep the platform 10 flat, either horizontally (as shown), or vertically. Although the platform is supple, the aircraft velocity combined with air friction maintains the platform substantially planar. Planarity may be promoted by pennants 16 attached to the trailing edge of the platform.

Moreover, it is desired that the platform assumes and maintains a desired attitude (such as horizontal) starting from an arbitrary attitude, especially upon take-off. This may be achieved with an attitude-correcting structure 18 arranged between the leading pole 12a and a towing cable 20 attached to the aircraft 22.

The structure 18 includes an attitude-correcting pole 24 configured, through a specifically tailored stay system, to assume a vertical position when towed. For obtaining a horizontal attitude of the platform 10, two traction stays 26a respectively connect a first end of the attitude-correcting pole 24 to two opposite ends of the leading pole 12a, and two further traction stays 26b connect a second end of the pole 24 to the two opposite ends of the leading pole 12a. As seen in figure 1B, the traction stays 26a, 26b converging to a same point of the leading pole 12a may have the same length.

The two ends of the attitude-correcting pole 24 are moreover connected to an end of the towing cable 20 by two respective stays 28a, 28b. The lengths of these stays may be chosen, as shown, so that the top one 28a is shorter than the bottom one 28b, which has the effect of promoting the verticality of pole 24 during flight. The verticality of pole 24 may be further promoted by providing a ballast weight at the bottom of the pole.

Intermediate traction stays (not shown for sake of clarity) may be provided for reducing flexion of the involved poles.

The towing cable 20 is in fact separated in two segments, one linked to the aircraft, and the other to the towed device. The two segments are connected to each other mechanically and electrically through an attachment element 30, this element being configured to be hooked in flight by the aircraft. More ample details may be found in the above-mentioned patent application.

A towed device such as disclosed above may cause difficulties in various circumstances. For instance, using a supple fabric for larger platforms 10 happens to cause significant drag, to the extent that smaller aircraft may not have sufficient power for attaining sufficient speed to ensure a stable horizontal attitude.

### Summary

An aircraft-towed device is provided, that generally comprises a support structure that is substantially flat when deployed; a transmission antenna mounted on the support structure, having a conductor wound in a loop near the edges of the support structure; an attachment element configured for mechanically and electrically coupling the towed device to a towing cable; and an attitude-correcting pole arranged between the attachment element and the support structure, and configured to assume a vertical position when the device is towed. The towed device comprises power conversion circuitry coupled between the attachment element and the transmission antenna, configured to power the transmission antenna at a high current and a low voltage from a higher voltage and lower current conveyed through the towing cable; and the power conversion circuitry is mounted at the bottom of the attitude-correcting pole.

The device may further comprise a leading pole transversal to a flight direction, attached to the support structure; and traction stays respectively connecting a first end of the attitude-correcting pole to two opposite ends of the leading pole, and a second end of the attitude-correcting pole to the two opposite ends of the leading pole, giving the leading pole a horizontal attitude when the attitude-correcting pole is in the vertical position. Some of the traction stays may be pre-tensioned sheaths for housing conductors running between the attachment element, the power conversion circuitry, and the transmission antenna.

The support structure may be a meshless frame, further comprising a trailing pole transversal to the flight direction; first and second longitudinal stays attached between the leading and trailing poles, establishing substantially straight lateral edges of the frame when the device is towed; and an aerodynamic damping structure attached to the trailing pole. The conductor of the transmission antenna may be wound in a loop successively along the leading pole, the first longitudinal stay, the trailing pole, and the second longitudinal stay.

The leading pole and the trailing pole may each have a length of at least ten meters, each longitudinal stay a length of at least thirty meters, and the attitude adjustment pole a height of at least five meters.

Each longitudinal stay may be a pre-tensioned sheath and each transversal pole may be hollow, the conductor of the transmission antenna being housed inside each sheath between the transversal poles, and housed inside each transversal pole.

The device may further comprise a first inertial measurement unit attached to the leading pole in alignment with the towing cable when deployed; a second inertial measurement unit attached to the trailing pole in alignment with the towing cable when deployed; and control circuitry for operating the first and second inertial measurement units, housed at the bottom of the attitude-correcting pole, and configured to collect data for estimating planarity errors of the transmission antenna.

The device may further comprise third and fourth longitudinal stays, each attached between the leading and trailing poles, and offset inside the frame from the first and second stays; third and fourth transversal poles, each attached between the third and fourth stays, and offset inside the frame from the leading and trailing poles; a receiving antenna including a conductor wound in a loop successively along the third pole, the third stay, the fourth pole, and the fourth stay, and connected to processing circuitry housed at the bottom of the attitude-correcting pole; and a third inertial measurement unit connected to the control circuitry and attached to one of the third and fourth poles in alignment with the first and second inertial measurement units, the control circuitry being configured with the first and second inertial measurement units to collect data for estimating planarity errors of the reception antenna.

The longitudinal stays may be pre-tensioned sheaths in which conductors of the antennas are housed.

The device may further comprise a central longitudinal stay attached between the leading and trailing poles, the central stay being a pre-tensioned sheath housing a conductor for operating the second and third inertial measurement units.

The device may further comprise communication circuitry housed at the bottom of the attitude-correcting pole and configured to exchange control and data signals of the antennas and inertial measurement units with the aircraft.

The control and data signals may be exchanged with the aircraft through a wireless connection.

The control and data signals may be exchanged with the aircraft through a power-line communication (PLC) connection over power supply conductors between the aircraft and the power conversion circuitry.

### Brief Description of Drawings

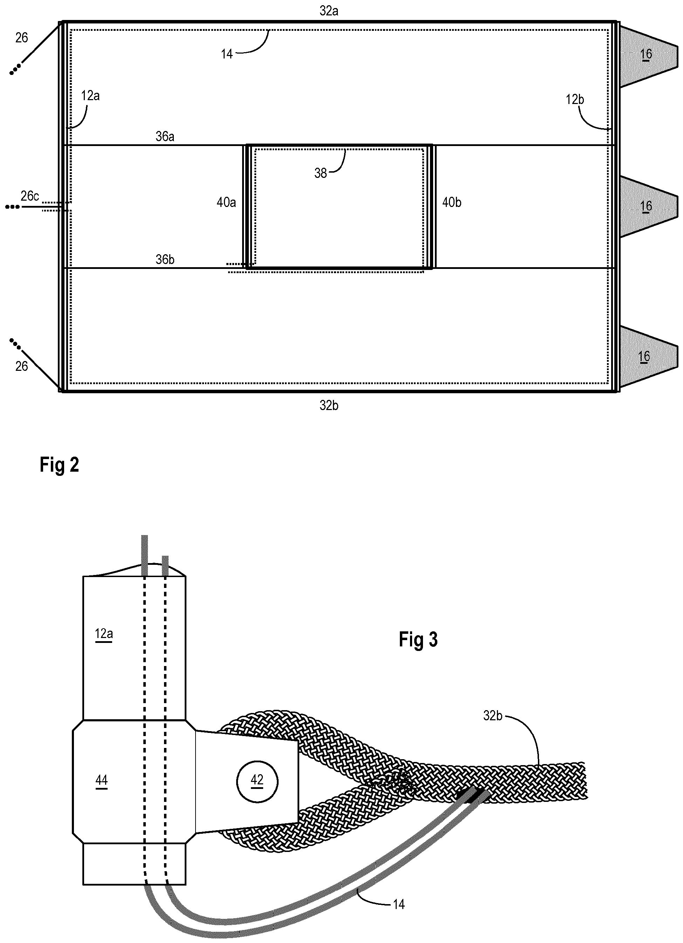

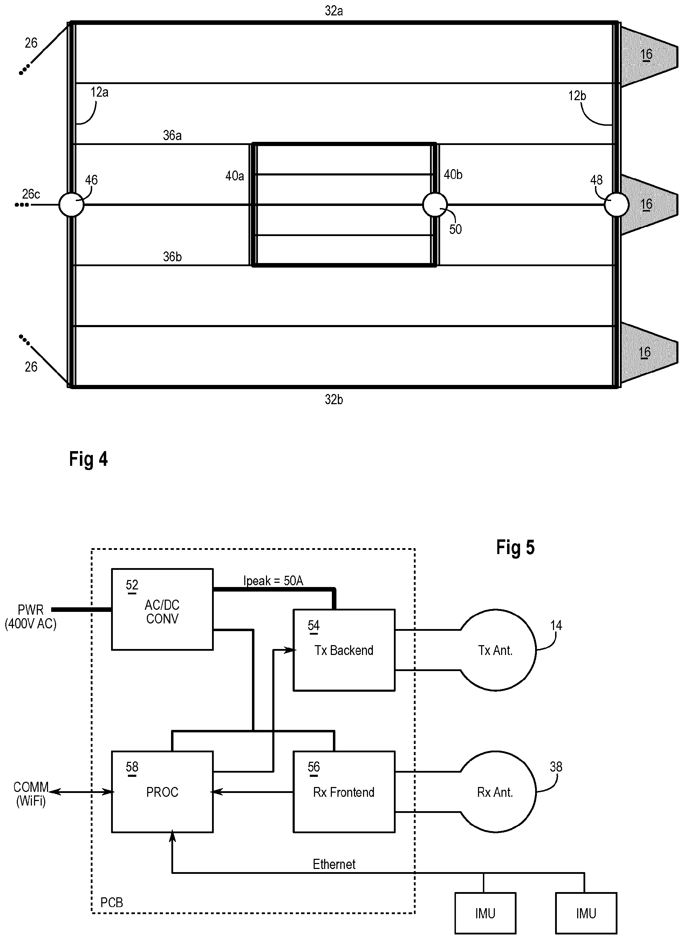

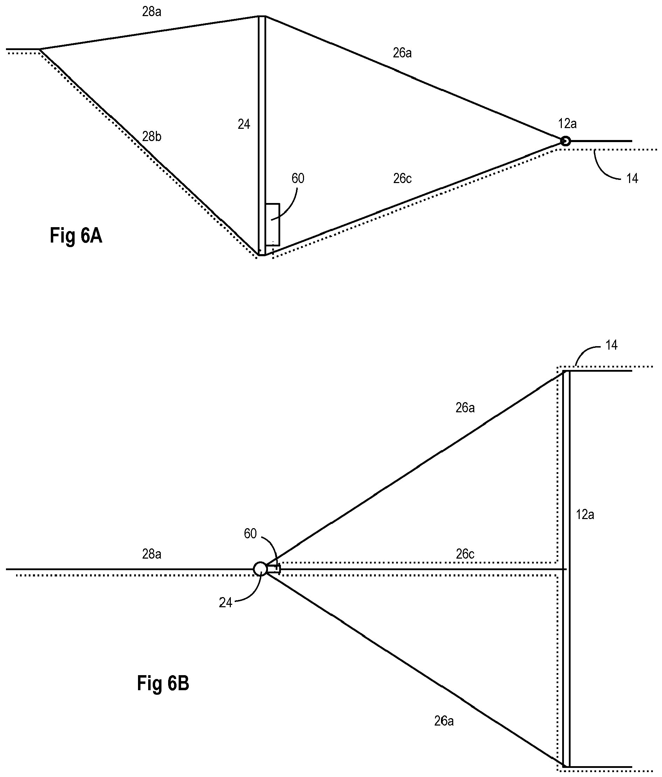

Other advantages and features will become more clearly apparent from the following description of particular embodiments of the invention provided for exemplary purposes only and represented in the appended drawings, in which:
▪ Figures 1A and 1B, previously described, are schematic perspective and side views of an exemplary conventional aircraft-towed device;
▪ Figure 2 is a schematic top or bottom view of an embodiment of a meshless frame serving as a support structure for measurement devices;
▪ Figure 3 is a detail view of an exemplary attachment structure between elements of the frame of figure 2;
▪ Figure 4 is a schematic top or bottom view of another embodiment of a meshless frame, bearing inertial measurement units;
▪ Figure 5 is an exemplary circuit diagram of power conversion and control circuitry for active elements of the towed device; and
▪ Figures 6A and 6B are schematic side and top views of an attitude-correcting structure, wherein electronic circuit components are housed at the bottom of an attitude-correcting pole, according to an embodiment.

### Description of Embodiments

As previously mentioned, conventional airborne platforms for carrying measurement devices are essentially comprised of fabric or a close-knit mesh held firm during flight between elements of a frame, such as a leading pole and a trailing pole transversal to the flight direction. The belief was that such a mesh is necessary for ensuring sufficient lift for maintaining a desired attitude during flight, especially for very large platforms.

It actually appears that the use of fabric or mesh, especially in very large platforms, creates more lift than necessary, with the side-effect of causing significant drag.

Another belief was that the mesh confers a fixed shape to the platform, for instance rectangular, with a reduced number of frame elements. It actually appears that the role of the mesh is negligible for maintaining a fixed shape.

The present disclosure therefore aims at removing the fabric or mesh altogether. The platform is thus reduced to a meshless frame.

Figure 2 schematically depicts an embodiment of such a meshless frame. Like the platform of figure 1A, the frame includes a leading transversal pole 12a that may be connected to an attitude-correcting structure through traction stays 26, and a trailing transversal pole 12b. The fabric of figure 1A is replaced by two longitudinal frame elements 32a, 32b, establishing respective lateral edges of the frame.

It appears that the mere elements thus forming the edges of the frame ensure significant lift at reasonable flight speeds of small aircraft (for example an average speed of 150 km/h), allowing the frame to assume a near-horizontal attitude. To perfect the horizontal attitude, an aerodynamic damping structure 16 may be attached to the trailing edge of the frame. This damping structure is configured to provide sufficient drag at the usual flying speed of the aircraft to lift the trailing pole towards the desired attitude of the frame. The aerodynamic damping structure 16 includes, for example, multiple pennants, as shown, made of a fabric that creates drag statically through friction and/or dynamically through flapping. For this purpose, the material used for the fabric may be similar to that used in airborne advertising banners, for example, having a weight of 50-80 g/m², and including regularly spaced perforations of 0.3-0.5mm in diameter. Other damping structures may be used, such as rigid flaps having external surfaces shaped to cause turbulence.

To be more precise, the attitude of the frame is actually determined by the direction of flight - the attitude will be substantially horizontal if the aircraft flies in a horizontal plane. The aircraft will normally fly at a relatively constant elevation, whereby "horizontal" actually means coplanar to the ground, which is the desired configuration.

Outstanding results were obtained with a meshless frame having a length of approximately 40 meters and a width of approximately 15 meters. The poles had a cross-section of 25mm, and three trapezoidal pennants of 2m x 2m were used. Although this structure may also prove satisfactory with smaller frames, it excels with very large frames, having a length of at least 30 meters and a width of at least 10 meters, and pennants occupying together a surface area of at least nine square meters.

In one embodiment, non-rigid materials may be used for the longitudinal frame elements. In fact, the longitudinal frame elements 32a, 32b may be supple, like the fabric of the conventional platform. These elements may be embodied by longitudinal stays attached between the ends of the poles. Such a configuration simplifies transport and storage.

The meshless frame described up to now is all that is needed for carrying a transmission antenna that may be used for geophysical or other measurements such as thermic measurements, air density or pollution measurements, or the like. The transmission antenna may include a conductor 14 wound in one or more loops running along the successive frame elements, as shown by a dotted line. The antenna winding may start and end at a point of the leading pole 12a where the antenna conductor can be led towards the towing cable (not shown) along one of the traction stays 26, for instance a central traction stay 26c.

More traction stays 26 than those shown may be provided to confer satisfactory rigidity to the leading pole 12a. In order to confer rigidity to the trailing pole 12b, additional longitudinal stays may be attached between the poles 12a, 12b, such as two inner stays 36a, 36b placed at one third and two thirds of the frame width.

For performing measurements in some applications, such as geophysical measurements, a reception antenna is usually also provided. The reception antenna may be significantly smaller than the transmission antenna, for instance 13m x 5m where the transmission antenna is 40m x 15m. The reception antenna may have a conductor 38 that is wound, as shown by a dotted line, along an internal sub-frame including segments of the inner longitudinal stays 36a, 36b and two spaced apart transversal poles 40a, 40b attached between the stays 36a, 36b. The poles 40a and 40b may be placed approximately at one third and two thirds of the frame length. The reception antenna conductor may be led towards the front of the device along one of the inner stays 36a, 36b.

The antenna conductors could be external to the stays, and be attached to the stays at regular intervals. This would however increase drag and increase the risk of damaging the conductors.

Figure 3 is a detail view of an exemplary attachment structure between an end of the leading pole 12a and the stay 32b, showing an improved assembly for the antenna conductors. The stays, instead of being ropes or cables, may be in the form of sheaths. The sheaths may include high tensile strength braided fibers, such as aramid, high modulus polyethylene, or carbon fibers. Dyneema® sheaths for housing ropes may be used, for instance. Such sheaths are normally designed for protecting the ropes against wear, and not for contributing to the tensile strength of the ropes. The tensile strength of these sheaths alone is however more than sufficient for the stays in some of the applications envisioned here.

The various conductors used in the frame may then be housed within the sheaths. The poles are usually tubular or hollow, whereby the conductors may also be housed inside the poles. As shown, the sheath forming stay 32b houses two conductors 14, meaning that the transmission antenna has a two-turn winding in this example. The conductors 14 exit the sheath through an opening near the end of the pole and penetrate inside the pole, where they are led to the opposite end of the pole. The conductors are of course insulated to avoid short circuits.

As shown, the sheath may be terminated by an eye splice that is held by a pin or bolt 42 in a cuff 44 mounted to the pole 12a. The pole could also have a hole through which the end of the sheath is passed and knotted. The end of the sheath could be wound around the pole, and kept axially in place by pins traversing the pole.

A braided sheath, although it has sufficient tensile strength, presents a high elongation factor under traction. Such a feature could be incompatible with the conductors housed inside the sheaths. If no measures are taken, the sheaths would elongate in operation and cause rupture of the conductors inside. To avoid this, each sheath may be pre-tensioned while the conductors are housed inside. Once the conductors are housed, the ends of the sheath may be tightened around the conductors, whereby, if the sheath still contracts upon releasing tension, the conductors are compressed. Since the conductors can freely move inside the sheath, the conductors will assume a sinuous configuration. The conductors will then straighten to their full length without strain when the sheath elongates in operation.

A Dyneema® sheath designed for housing a 6mm rope may be pre-tensioned at 30 kg, for instance.

When the antenna conductors are housed inside the poles, the poles are preferably in a material permeable to electromagnetic radiation. The poles could thus be made of composite material including high modulus non-conductive fibers, such as aramid.

The poles could also be made of composite material including carbon fibers, which are conductive, whereby the poles could electromagnetically shield the antenna conductors within. In such cases, the antenna conductors may be electrically connected to the ends of the poles in the antenna path, whereby the poles become part of the antenna. For this purpose, the antenna conductors may be locally stripped from their insulation at the ends of the poles and be connected to the poles through screws or a conductive glue.

In other embodiments, multiple reception antennas may be used. Additional reception antennas may be mounted in front or behind the antenna 38 along the inner stays 36a, 36b. Reception antennas may also be mounted transversally, to the left or the right of the antenna 38.

In some embodiments, reception antennas and transmission antennas may be towed by different aircraft, drones or the like.

The meshless frame as disclosed up to now is not limited to conveying antennas or other measurement devices. It may be used for conveying devices including multiple discrete components that can be attached along the poles and stays, such as luminous display or signalling devices, including lamps attached along the poles and stays.

When flying in ideal conditions, it can be expected that the frame will have a stable and substantially horizontal attitude and offer measurement values within the expected error tolerances. However, in windy conditions or in the presence of turbulence, the frame may warp or tilt (roll or pitch), causing variations of the mean axis of the transmitted signal and variations of the sensitivity of the reception antenna. Such variations may induce measurement errors.

In the above-mentioned patent application WO2015/189483, the platform includes altimeters located in the corners. The altimeters thus theoretically record the elevation of each corner, whereby the planarity error of the platform can be estimated and used to compensate the measurement errors. In practice, however, the altimeters are not very accurate, since they would need to capture elevation variations, which are very small compared to the flight altitude, and their response time may be too slow.

Figure 4 is a schematic top or bottom view of another embodiment of a meshless frame, bearing inertial measurement units (IMUs) that may be used for compensating measurement errors due to warping or tilting of the frame. The IMUs take advantage of the presence of substantially rigid poles in the frame structure. A first IMU 46 may be attached to the leading pole 12a, preferably at the center of the pole. A second IMU 48 may be attached to the trailing pole 12b, preferably also at its center. The central location is preferred, because most frame deformations will be captured here as pure rotations.

The two IMUs 46, 48 may be sufficient to estimate the warping and tilting of both the transmission and reception antennas, assuming that the longitudinal stays all remain straight. To perfect the planarity error estimation of the reception antenna, a third IMU 50 may be attached to one of the inner poles 40a, 40b, here pole 40b, again preferably at the center.

The IMUs may be initialized by deploying the frame on the ground, assuming the ground is horizontal and flat beneath the frame. The IMUs may also be initialized from time to time by the pilot, when he estimates that the frame is horizontal. Each IMU, by twice integrating the measured accelerations, then records the displacements and rotations it is submitted to relative to the initial conditions. A frame warping will be measured when the IMUs record rolls of opposite angles. A frame roll will be measured when both IMUs record a same roll angle. A frame pitch will be measured when both IMUs record a same pitch angle. The IMU on the trailing pole may in addition record a vertical displacement, which can be ignored and calculated from the pitch angle and the frame length, or the other way around, whichever is more accurate.

The IMUs 46, 48 thus directly measure the distortion of the transmission antenna. The distortion of the reception antenna may be deduced from the distortion of the frame with the knowledge of its position within the frame, assuming the stays remain straight. The third IMU 50 may be used if that assumption is sometimes incorrect, for instance if turbulences cause a curvature of the stays. In that case, the linear accelerations measured by the IMUs should also be taken into account.

The IMUs will of course also measure yaw variations, i.e. rotations about an axis perpendicular to the frame. Such rotations normally do not correspond to a distortion of the frame, but rather to an off-axis flight, which would occur with lateral winds. In such circumstances, the measures would be taken along an axis offset from the aircraft's flight course. This offset may be calculated from the yaw angle recorded by the IMUs and the distance between the center of the frame and the aircraft.

As shown in the embodiment of figure 4, the frame may have additional longitudinal stays to promote the rigidity of the poles. Five equally spaced longitudinal stays may be arranged inside the frame. A central longitudinal stay may be in the form of a pre-tensioned sheath housing the conductors for operating the IMUs 48 and 50, together with the conductors of the reception antenna. The inner frame for the reception antenna may have further longitudinal stays, as shown, that do not go beyond the poles 40a, 40b.

A frame such as depicted in figures 2 and 4, having only longitudinal stays, is in fact articulated, i.e. the trailing pole 12b is free to shift laterally relative to the leading pole 12a. The resulting parallelogram deformation would also cause surface area variations of the antennas, and could be measured by the tail IMU 48. Such a deformation is however unlikely, at least over a significant period of time, because the frame would be in an unstable position. Therefore, diagonal stays that would prevent this parallelogram deformation are usually superfluous.

Although the meshless frame has been described up to now in examples of horizontal use, it may also be used vertically with an adapted attitude-correcting structure. The frame will not be subject to a parallelogram deformation - the frame will remain rectangular, but instead of flying with a horizontal axis, the frame will have an axis tilted downwards at the tail, which does not affect the amplitude of the measures. This tilt results from the reduction in lift caused by the pennants being vertical instead of horizontal. In any case, the tilt may be measured by the IMUs.

In operation, the transmission antenna 14 may be driven with pulses of significant intensity, in the order of 50A. The voltage depends on the impedance of the antenna, which will usually be chosen as low as possible. The power for driving the transmission antenna is provided by the aircraft, over a substantial length of towing cable and stays, and through a connector in the attachment element 30 (figure 1B). Such a length of conductors (often in excess of 100 meters), and the presence of a connector, substantially increases the impedance, hence the power loss when high currents are circulated.

To reduce the power loss, rather than transmitting the drive pulses from the aircraft to the antenna, it is proposed to include a power conversion circuit in the towed device near the transmission antenna. The power conversion circuit can be supplied at a high voltage produced in the aircraft, such as 300V AC, whereby significantly less current is required for transmitting the same power. As a result, conductors having smaller sections may be used in the towing cable, and the design of the connector in the attachment element may be less demanding. The antenna may then be driven from the power conversion circuit over a short conductor length with the higher current and lower voltage. Several other circuits may then be provided with the power conversion circuit.

Figure 5 is an exemplary circuit diagram of the power conversion circuit and other circuitry for operating the antennas and inertial measurement units. The power conversion circuit is exemplified as an AC/DC converter 52 that receives power from the aircraft in a high-voltage AC signal (for instance 300V). The converter may produce a high-current power supply for a transmission backend circuit 54 driving the transmission antenna 14, and a low-power supply for the remaining circuitry, such as a reception frontend circuit 56 coupled to the reception antenna 38, and a processing circuit 58.

Various circuits provided by the literature may be used. For example, super capacitors may be used in some configuration to store enough electrical energy and discharge it in a short time.

The processing circuit 58 may communicate with a computer in the aircraft and accordingly drive the transmission backend 54 and process the signals provided by the reception frontend 38. The IMUs may be connected to the processing circuit 58, for instance using an Ethernet connection. The processing circuit 58 may be configured to directly compensate the reception antenna signals based on the IMU outputs, or transfer the raw data for processing by the computer in the aircraft.

Communication with the aircraft may be achieved via a bus including conductors that run along the towing cable with the power conductors, and transit through the connector in the attachment element 30 (Figure 1B).

Alternatively, communication with the aircraft may be achieved through a wireless connection (for example Wi-Fi). Communication may also be achieved through the power conductors using a form of power-line communication (PLC). This would simplify connectivity, especially the connector structure in the attachment element.

According to another alternative, no communication is established with the aircraft. Instead, the antennas are operated according to a programmed sequence, and data is collected for later retrieval and processing in a non-volatile memory connected to the processing circuit 58.

The circuitry of figure 5 may be mounted on a common printed circuit board (PCB) that may be housed in a suitable location in the towed device. The power conversion circuit 52 and the transmission backend 54 handle significant power, and therefore include relatively heavy components with large copper sections, such as transformers and inductors. Such an element may appear to be burdensome and undesirable in a towed device essentially comprised of light and frail elements.

In fact, as disclosed in patent application WO2015/189483, the towed device includes an attitude-correcting pole that should assume a vertical position when towed. To promote the vertical position, the above patent application suggests to attach a ballast weight at the bottom of the pole. Instead of providing such a ballast weight, it is proposed herein to house the circuitry of Figure 5 at the bottom of the attitude-correcting pole.

Figures 6A and 6B are schematic side and top views of an attitude-correcting structure, such as also shown in figures 1A and 1B. The figures 6A and 6B differ from Figures 1A and 1B in that the attitude-correcting pole 24 comprises a housing 60 attached to its bottom end, in which the circuitry of figure 5 is located. The attitude-correcting pole 24 may have a height of four to six meters. The housing 60 may be oriented toward the tail end and be flat profiled, so that it can be totally or partially hidden behind the pole 24 and offer little resistance to the air flow during flight.

Figures 6A and 6B also illustrate in dotted lines exemplary paths taken by the various conductors along the poles and stays, the stays being preferably pre-tensioned sheaths in which the conductors are housed, as previously described. The antenna conductor 14 may reach housing 60 through a bottom-central traction sheath 26c. Sheath 26c may also house the conductors from the reception antenna and the IMUs, not shown. Conductors connecting the housing to the aircraft may run in the bottom traction stay or sheath 28b and the towing cable, which may also be configured as a sheath. Only a few traction stays are shown for sake of clarity - in practice each pole may be attached to stays at five or six equally spaced points, for example.

Although the two aspects of using IMUs for correcting the antenna measures, and of placing power conversion circuitry as a ballast weight at the bottom of the attitude-correcting pole have been described in relation with a meshless frame, these aspects are independent and may each be used with a conventional fabric-based platform.

## Claims

1. An aircraft-towed device, comprising:
• a support structure (10) that is substantially flat when deployed;
• a transmission antenna (14) mounted on the support structure, having a conductor wound in a loop near the edges of the support structure;
• an attachment element (30) configured for mechanically and electrically coupling the towed device to a towing cable (20); and
• an attitude-correcting pole (24) arranged between the attachment element and the support structure, and configured to assume a vertical position when the device is towed;
**characterized in that**:
• the towed device comprises power conversion circuitry (52, 54) coupled between the attachment element and the transmission antenna, configured to power the transmission antenna (14) at a high current and a low voltage from a higher voltage and lower current conveyed through the towing cable; and
• the power conversion circuitry is mounted (60) at the bottom of the attitude-correcting pole.

2. The device of claim 1, comprising:
• a leading pole (12a) transversal to a flight direction, attached to the support structure; and
• traction stays (26a, 26b) respectively connecting a first end of the attitude-correcting pole to two opposite ends of the leading pole, and a second end of the attitude-correcting pole to the two opposite ends of the leading pole, giving the leading pole a horizontal attitude when the attitude-correcting pole is in the vertical position;
wherein some of the traction stays are pre-tensioned sheaths for housing conductors running between the attachment element, the power conversion circuitry, and the transmission antenna.

3. The device of claim 2, wherein the support structure is a meshless frame, further comprising:
• a trailing pole (12b) transversal to the flight direction;
• first and second longitudinal stays attached between the leading and trailing poles, establishing substantially straight lateral edges of the frame when the device is towed; and
• an aerodynamic damping structure (16) attached to the trailing pole;
wherein the conductor of the transmission antenna is wound in a loop successively along the leading pole, the first longitudinal stay, the trailing pole, and the second longitudinal stay.

4. The device of claim 3, wherein the leading pole and the trailing pole each has a length of at least ten meters, each longitudinal stay has a length of at least thirty meters, and the attitude adjustment pole has a height of at least five meters.

5. The device of claim 3, wherein each longitudinal stay is a pre-tensioned sheath and each transversal pole is hollow, the conductor of the transmission antenna being housed inside each sheath between the transversal poles, and housed inside each transversal pole.

6. The device of claim 3, comprising:
• a first inertial measurement unit attached to the leading pole in alignment with the towing cable when deployed;
• a second inertial measurement unit attached to the trailing pole in alignment with the towing cable when deployed; and
• control circuitry for operating the first and second inertial measurement units, housed at the bottom of the attitude-correcting pole, and configured to collect data for estimating planarity errors of the transmission antenna.

7. The device of claim 6, comprising:
• third and fourth longitudinal stays, each attached between the leading and trailing poles, and offset inside the frame from the first and second stays;
• third and fourth transversal poles, each attached between the third and fourth stays, and offset inside the frame from the leading and trailing poles;
• a receiving antenna including a conductor wound in a loop successively along the third pole, the third stay, the fourth pole, and the fourth stay, and connected to processing circuitry housed at the bottom of the attitude-correcting pole; and
• a third inertial measurement unit connected to the control circuitry and attached to one of the third and fourth poles in alignment with the first and second inertial measurement units, the control circuitry being configured with the first and second inertial measurement units to collect data for estimating planarity errors of the reception antenna.

8. The device of claim 7, wherein the longitudinal stays are pre-tensioned sheaths in which conductors of the antennas are housed.

9. The device of claim 8, comprising a central longitudinal stay attached between the leading and trailing poles, the central stay being a pre-tensioned sheath housing a conductor for operating the second and third inertial measurement units.

10. The device of claim 7, comprising communication circuitry housed at the bottom of the attitude-correcting pole and configured to exchange control and data signals of the antennas and inertial measurement units with the aircraft.

11. The device of claim 10, wherein the control and data signals are exchanged with the aircraft through a wireless connection.

12. The device of claim 10, wherein the control and data signals are exchanged with the aircraft through a power-line communication (PLC) connection over power supply conductors between the aircraft and the power conversion circuitry.
